(19) Europäisches Patentamt
European Patent Office
Office européen des brevets

(11) Veröffentlichungsnummer: **0 382 084**
**A2**

## (12) EUROPÄISCHE PATENTANMELDUNG

(21) Anmeldenummer: 90101967.9

(51) Int. Cl.⁵: **B29D 22/00, B29D 24/00**

(22) Anmeldetag: 01.02.90

(30) Priorität: 04.02.89 DE 8901241 U

(43) Veröffentlichungstag der Anmeldung:
16.08.90 Patentblatt 90/33

(84) Benannte Vertragsstaaten:
AT BE CH DE DK ES FR GB GR IT LI LU NL SE

(71) Anmelder: Mönch Kunststofftechnik GmbH
Frankfurter Strasse 32
D-6123 Bad König 1(DE)

(72) Erfinder: Mönch, Theodor Peter
Talweg 15
D-6101 Brensbach-Höllerbach(DE)

(74) Vertreter: Stoffregen, Hans-Herbert, Dr.
Dipl.-Phys.
Patentanwälte Strasse & Stoffregen
Salzstrasse 11a Postfach 2144
D-6450 Hanau/Main 1(DE)

(54) Mehrschichtige Hohlkammerplatte und Verfahren zur Herstellung einer solchen.

(57) Es wird eine mehrschichtige Hohlkammerplatte (66) aus thermoplastischem Kunststoff vorgeschlagen, die aus parallel zueinander verlaufenden, über Stege (68) zusammensetzbar verbundenen Schichten oder Gurtplatten (70, 72) besteht. Jede Fläche (73, 74, 84) einer jeden Schicht ist geglättet, so daß sich eine Hohlkammerplatte hoher optischer Güte ergibt.

FIG. 2

EP 0 382 084 A2

## Mehrschichtige Hohlkammerplatte und Verfahren zur Herstellung einer solchen.

Die Erfindung bezieht sich auf eine mehrschichtige Hohlkammerplatte aus thermoplastischem Kunststoff bestehend aus parallel zueinander verlaufenden, über Stege gegebenenfalls zusammensetzbar verbundenen Schichten. Ferner bezieht sich die Erfindung auf ein Verfahren zur Herstellung einer mehrschichtigen Hohlkammerplatte.

Hohlkammerplatten werden durch Extrusion vornehmlich von Polymethylmethacrylat, Polycarbonat, Polyethylen und Polyvinylchlorid hergestellt. Dabei werden durch die Extrusion mittels eines dem Querschnitt der Platte entsprechenden Werkzeuges gleichzeitig die Schichten, die auch als Gurte bzw. Außen- und Innengurte bezeichnet werden, und die dieses verbindenden Stege erzeugt. Nach dem Austritt des Hohlstranges aus der Extrusionsdüse wird das Material beim Durchlaufen eines Vakuumformkanals unter die Erweichungstemperatur abgekühlt.

Hohlkammer- bzw. Stegmehrfachplatten haben sich insbesondere bei der Erstellung von Gewächshäusern, Wintergärten, Sporthallen oder bei der Verglasung von Industriebauten als kostengünstiger und bruchfester Ersatz zu Mehrfachglaseindeckungen erwiesen.

Die bekannten Hohlkammerplatten zeigen jedoch den Nachteil, daß sie optisch der Glaseindeckung nicht entsprechen, da eine Glättung sowohl der Außen- als auch der Innenseite mit den für eine Massenproduktion geeigneten technischen Mitteln nicht möglich ist.

Aufgabe der vorliegenden Erfindung ist es, eine Hohlkammerplatte der eingangs genannten Art so weiterzubilden, daß sie in bezug auf die Optik gute Eigenschaften aufweist, also eine Transparenz wie Glas aufweist, und zudem gegebenenfalls die Möglichkeit schafft, problemlos auf gewünschte K-Werte eingestellt zu werden. Auch soll eine hohe Steifigkeit möglich sein, um so die Abstände zur Unterstützung der Hohlkammerplatte vergrößern zu können. Schließlich soll die Möglichkeit geschaffen werden, Hohlkammerplatten "kompakt" transportieren zu können.

Die Aufgabe wird erfindungsgemäß im wesentlichen dadurch gelöst, daß jede Schicht beidseitig geglättet ist, wobei von zumindest einer Fläche einer jeden Schicht Elemente ausgehen, über die die Schichten zur Bildung der Hohlkammerplatte mittelbar oder unmittelbar verbunden sind.

Mit anderen Worten wird abweichend von den bisherigen Herstellungsverfahren die Hohlkammerplatte nicht als Einheit durch Extrusion hergestellt, sondern aus Einzelteilen zusammengesetzt, die ihrerseits extrudiert sind. Dabei weist zumindest die Seite, d.h. Fläche einer jeden Schicht, die einer anderen zugewandt ist, abragende Abschnitte auf, die bei zusammengesetzter Hohlkammerplatte Teile der Stege sind. Da die Abschnitte im wesentlichen lotrecht zu den Schichtflächen verlaufen, bereitet es nunmehr keine Schwierigkeiten mehr, sowohl die Innen- als auch die Außenseite mittels Walzen zu kalandrieren, um so die gewünschte optische Güte, also geglättete Flächen zu erhalten. Es ist nämlich nur noch erforderlich, daß die Kalandrierwalzen, die entlang der die Stegabschnitte aufweisenden Seite der Schicht, die auch als Gurtplatte zu bezeichnen ist, abgerollt werden, im Bereich der zu den Stegen zu ergänzenden Elemente entsprechende Freiräume aufweisen, die senkrecht zur Drehachse der Walzen verlaufen.

Die erfindungsgemäße Hohlkammerplatte kann nicht nur als Stegdoppelplatte, sondern auch als Stegmehrfachplatte ausgebildet sein. Hierzu ist es nur erforderlich, daß die innenliegenden Schichten, also die Zwischengurtplatten zu beiden Seiten abragende, die Verbindungsstege ergänzende Abschnitte aufweisen.

Um den K-Wert im gewünschten Umgang zu variieren, besteht ferner die Möglichkeit, die die Stege bildenden Abschnitte gerastet zusammenzusetzen. Hierdurch kann der Abstand der Schichten im gewünschten Umfang verändert werden, wodurch wiederum der K-Wert beeinflußt wird.

Nach einer weiteren Ausführungsform weist ein freies Ende eines von der Gurtplatte abragenden Elements oder Abschnitts mehrere zueinander beabstandete Rastvorsprünge auf, denen am freien Ende des anderen Elements oder Abschnitts entsprechende Rastausnehmungen zugeordnet sind. Dies bedeutet, daß die von einer Schicht ausgehenden Abschnitte z.B. eine tannenzapfenförmige Querschnittsgeometrie aufweisen, denen eine mit einer angepaßten Innengeometrie zugeordnete Aussparung des Abschnitts der anderen Schicht zugeordnet ist.

Bei einem anderen Vorschlag ist das freie Ende eines Abschnitts als wulstartige Verstärkung ausgebildet, der eine angepaßte Aussparung im freien Ende des anderen Abschnitts zugeordnet ist.

Neben dieser Art des Verbindens, die einem Zusammensetzen, Zusammenstecken gleichkommt, besteht selbstverständlich auch die Möglichkeit, die Schichten über von diesen abragenden Vorsprünge zu verschweißen.

Nach einer eigenerfinderischen Ausführungsform weist der die Schichten verbindende Steg einen entfernbaren Abschnitt auf, der seinerseits mit den Abschnitten zusammenwirkt, die von den Schichten ausgehen. Hierdurch ergibt sich der Vorteil, daß nur durch Austausch des entfernbaren Abschnittes der Abstand zwischen den Schichten veränderbar ist, ohne daß die Schichten mit deren Abschnitten unterschiedlich ausgebildet sein müssen. Hierdurch ergibt sich insbesondere der Vorteil, daß der Abstand der Schichten zueinander variiert werden kann. Folglich wird die Möglichkeit eröffnet, daß die Schichten der Hohlkammerplatte in deren Mittenbereich einen größeren Abstand als in deren Randbereichen aufweisen. Als Folge hiervon wird die Tragfähigkeit der Hohlkammerplatte erhöht und/oder die Unterstützungsabstände können vergrößert werden.

Auch ist darauf hinzuweisen, daß die Stege nicht notwendigerweise aus dem gleichen Material wie das der Schichten bestehen muß. Die Stege können abschnittsweise aus solchen Materialien hergestellt sein, die z.B. eine höhere Elastizität bzw. Festigkeit als der thermoplastische Kunststoff aufweisen, so daß das Zusammensetzen bzw. Entfernen der einzelnen Schichten problemlos erfolgen kann.

Insbesondere werden die die Schichten oder Gurtplatten verbindenden Stege aus von diesen ausgehenden linienförmig verlaufenden, mit wulstartigen Enden versehenen Vorsprüngen und diese verbindenden stegartigen Elementen gebildet, die ihrerseits Aufnahmen für die wulstartigen Enden aufweisen. Diese können durch Ausbildung der freien Schenkel der im Schnitt H-förmigen Verbindungselemente gewonnen werden, indem diese einander zugewandte Endabschnitte aufweisen.

Um bei zusammengesetzten wie -gesteckten Mehrschichthohlkammerplatten störende Geräusche aufgrund einer Relativbewegung zwischen den einzelnen Schichten und den diese verbindenden Stegen auszuschließen, sind die lösbar mit den von den Schichten abragenden Elementen wie linienförmig verlaufenden wulstförmig ausgebildeten Vorsprünge zusammengesetzten stegartigen Verbindungsstücke bzw. -elemente, die eine H-Querschnittsform aufweisen können, zumindest abschnittsweise durch z.B. Ultraschall oder Hochfrequenz innig verbunden.

Ein weiterer Vorteil der erfindungsgemäßen Mehrschichthohlkammerplatte ist darin zu sehen, daß der Transport weniger Raum benötigt, da die einzelnen Schichten raumsparend gestapelt und erst vor Ort zusammengesetzt werden können.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten Ausführungsbeispielen.

Es zeigen;

Fig. 1 einen Schnitt einer Stegdoppelplatte mit unterschiedlich ausgebildeten Stegen,

Fig. 2 einen Ausschnitt einer bevorzugten Ausführungsform einer Stegdoppelplatte,

Fig. 3 eine Variante zur Stegdoppelplatte nach Fig. 2 und

Fig. 4 eine Prinzipdarstellung zum Glätten der Flächen von Schichten von Stegdoppel- bzw. -mehrfachplatten.

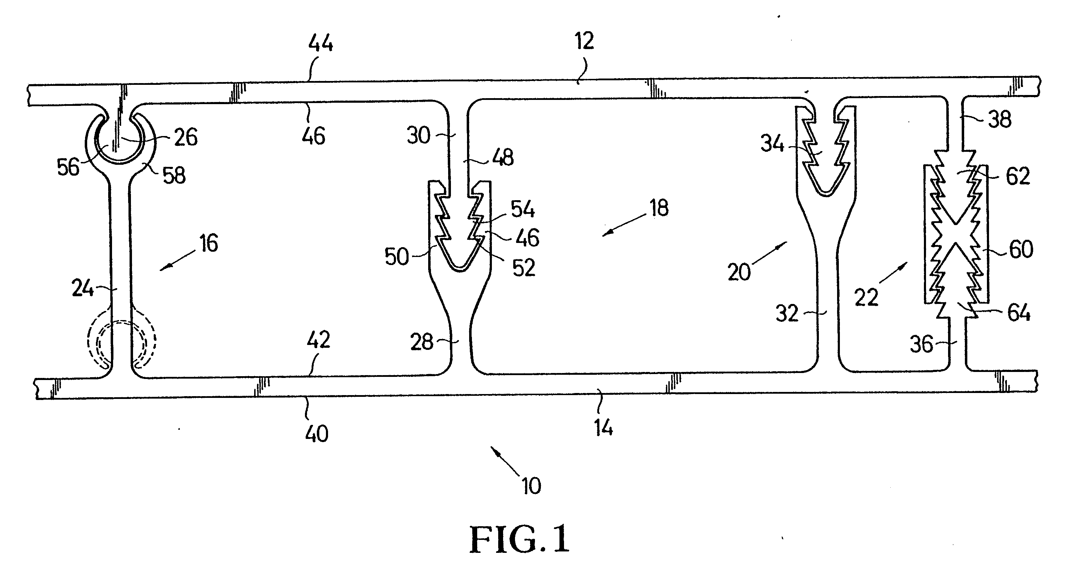

In Fig. 1 ist im Schnitt eine Stegdoppelplatte (10) dargestellt, die aus parallel zueinander verlaufenden Schichten oder Gurtplatten (12) und (14) und den sie verbindenden Stegen (16), (18), (20) und (22) besteht. Ist im Ausführungsbeispiel eine Stegdoppelplatte (10) dargestellt, so ist die erfindungsgemäße Lehre selbstverständlich auch auf Stegmehrfachplatten übertragbar.

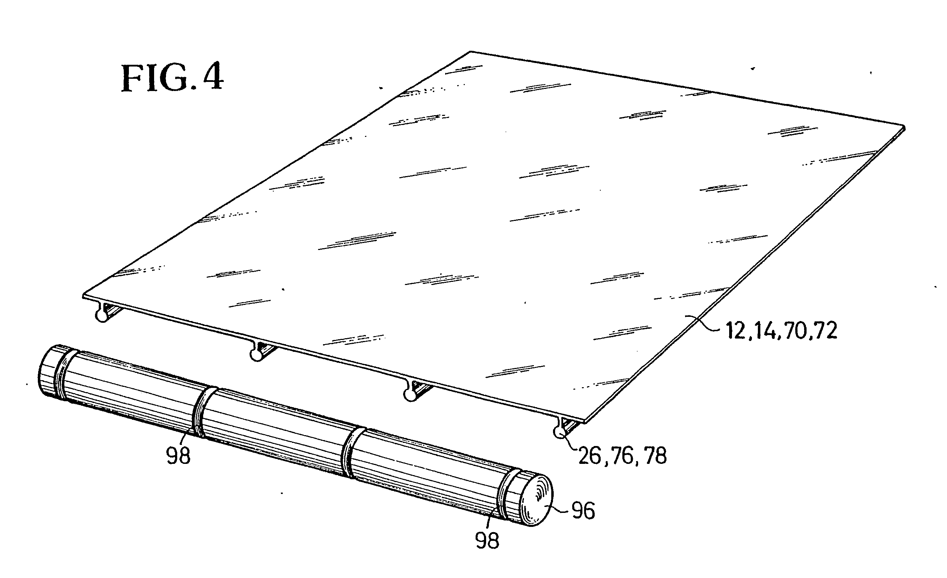

Wie die zeichnerische Darstellung erkennen läßt, bilden die Stege (16), (18), (20) und (22) mit den Schichten (12) und (14) keine übliche, herstellungstechnisch bedingte Einheit, sondern sind über aus Abschnitten bestehende Stege, auf die nachstehend noch einzugehen ist, lösbar zusammengesetzt. Hierdurch ergibt sich der Vorteil, daß jede Schicht (12) bzw. (14) mit von dieser abragendem Stegabschnitt (24), (26); (28), (30); (32), (34) und (36), (38) getrennt herstellbar ist. Dies bedeutet wiederum, daß sowohl die Außen- als auch die Innenfläche (40), (42) bzw. (44), (46) einer jeden Schicht (14) bzw. (12) durch z. B. Kalandrierwalzen (s. auch Fig. 4) geglättet werden kann, um eine optisch klare Oberfläche zu gewinnen, so daß eine Hohlkammerplatte (10) zur Verfügung steht, die von der Optik her weitgehend einer Glasscheibe entspricht.

Die einzelnen Abschnitte der Stege können gemäß der zeichnerischen Darstellung eine Vielfalt von Geometrien aufweisen, wobei in bezug auf die Stege (18), (20) und (22) der Vorteil erzielbar ist, daß der Abstand zwischen den Schichten (12) und (14) veränderbar ist, wodurch wiederum der K-Wert beeinflußbar ist. Folglich kann die Dicke der Hohlkammerplatte (10) variiert werden.

Der Steg (18) setzt sich aus einem Abschnitt (30) mit einem tannenzapfenförmig ausgebildeten Ende (46) und einem in die Schicht (12) übergehenden stegförmigen Abschnitt (48) zusammen. Dem Endbereich (46) ist eine der Geometrie angepaßte Aufnahme (50) des Abschnitts (28) zugeordnet. Die Innengeometrie des Abschnitts (50) weist mehrere zueinander beabstandete Rastausnehmungen (42) auf, denen Rastvorsprünge (54) des Endabschnitts (46) zugeordnet sind. Hierdurch ergibt sich eine gerastete Abstandsveränderung zwischen den Schichten (12) und (14).

Eine ähnliche Geometrie in bezug auf die freien Enden ergibt sich bei den Abschnitten (32) und (34) des Steges (20).

Der Steg (16) setzt sich aus den Abschnitten (24) und (26) zusammen, wobei der Abschnitt (26) eine wulstartige Verstärkung (56) zeigt, die von einem klauenartigen Endabschnitt (58) des Abschnitts (24) bei zusammengesetzter Hohlkammerplatte (10) zumindest bereichsweise umfaßt wird.

Es versteht sich, daß die Stege (16), (18), (20) bzw. die diese bildenden Abschnitte (24), (26), (28), (30) und (32), (34) senkrecht zur Zeichenebene verlaufen und sich über die gesamte Breite bzw. Länge der Schicht (12) und (14) erstrecken.

Sind die Abschnitte der Stege (16), (18) und (20) unterschiedlich ausgebildet, so daß jede Schicht (12) bzw. (14) mit von dieser ausgehenden Abschnitten mit unterschiedlichen Extrudierwerkzeugen hergestellt werden muß, so braucht bei einer Ausbildung des Stegs (22) nur ein Werkzeug benutzt werden, da die Schichten (12) und (14) mit von diesen ausgehenden Abschnitten (36) und (38) identisch ausgebildet sind. Um die Abschnitte (36) und (38) untereinander zu verbinden, ist ein zylinderförmig ausgebildeter weiterer Abschnitt (60) vorgesehen, der seinerseits gerastet mit den Endbereichen (62) und (64) der Abschnitte (36) und (38) wechselwirkt. Hierdurch ergibt sich auch der Vorteil, daß problemlos der Abstand zwischen den Schichten (12) und (14) verändert werden kann.

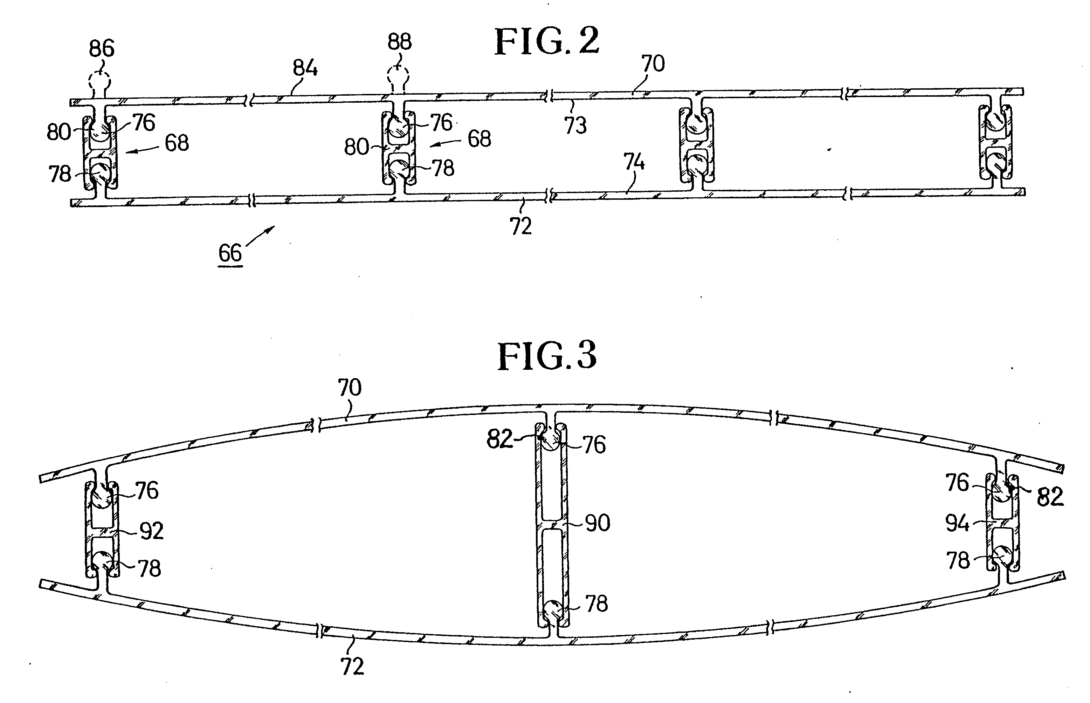

Der Fig. 2 ist eine besonders hervorzuhebende Ausgestaltung einer erfindungsgemäßen Stegdoppelplatte (66) zu entnehmen, die aus zwei über einen Steg (68) lösbar verbundene Schichten oder Gurtplatten (70) und (72) besteht. Von den einander zugewandten Flächen (73) und (74) der Gurtplatten (70) und (72) gehen parallel zueinander und linienförmig verlaufende, im Schnitt knaufartige Vorsprünge (76), (78) aus, die über stegförmige Verbindungselemente (80) verbindbar sind. Die stegförmigen Verbindungselemente (80) weisen im Schnitt eine H-Form auf, wobei die Endabschnitte eine Geometrie aufweisen, um die wulstartigen Endabschnitte der Vorsprünge (76) und (78) quasi rastend aufnehmen zu können. Hierzu können die freien Enden der Schenkel der Verbindungselemente (80) einander zugewandt sein.

Um bei der Verwendung der Stegdoppelplatte (66) sicherzustellen, daß die stegförmigen Verbindungselemente (80) eine zu störenden Geräuschen führende Relativbewegung nicht ausüben, erfolgt ein punktuelles inniges Verbinden zwischen dem stegförmigen Verbindungsstück (80) und den Vorsprüngen (76) und (78). Dieses innige Verbinden in Form von z.B. Verschweißen kann mittels Ultraschall oder Hochfrequenz erfolgen. Auch ist ein Kleben denkbar. Die innige Verbindung ist in Fig. 2 rein schematisch durch einen ausgefüllten Punkt angedeutet, der mit dem Bezugszeichen (82) versehen ist.

Selbstverständlich kann nach der Grundkonzeption der Stegplatte (66) der Fig. 2 auch eine Mehrfachstegplatte aufgebaut sein. Hierzu ist es nur erforderlich, daß von beiden Flächen der Zwischengurtplatten, also von den zwischen den Außengurten verlaufenden Schichten oder Platten beiden Seiten, Elemente abragen. In der Zeichnung wird dies dadurch angedeutet, daß sowohl von der Fläche (72) als auch von der gegenüberliegenden mit dem Bezugszeichen (84) versehenen Fläche Vorsprünge (76) und -gestrichelt dargestellte- Vorsprünge (86) und (88) ausgehen, um so eine Verbindung über weitere stegartigen Verbindungsstücke zu Vorsprüngen weiterer Gurtplatten zu ermöglichen.

Dadurch, daß die Gurtplatten (72), (70), die identisch aufgebaut sind, zunächst lösbar über die stegartigen Verbindungsstücke verbindbar sind, besteht auch die Möglichkeit, den Abstand zwischen den Gurtplatten (70) und (72) zu variieren, d.h. z.B. im Mittenbereich der Stegdoppelplatte einen größeren Abstand als in den Randbereichen einzustellen. Diese Variante soll rein schematisch in der Fig. 3 angedeutet werden. Man erkennt, daß der mittlere Verbindungssteg (90) eine größere Länge als die Verbindungsstege (92) und (94) im Randbereich aufweit. Hierdurch ergibt sich eine Ausbuchtung im Mittenbereich der Stegdoppelplatte, wodurch eine Erhöhung der Tragkraft der Stegdoppelplatte erreicht wird. Gleichzeitig eröffnet sich die Möglichkeit, den Abstand zur Unterstützung der Stegdoppelplatte zu vergrößern. So kann der Abstand zwischen den seitlichen Abstützungen z.B. 150 cm bei einem Abstand der Gurtplatten im Mittenbereich von 10 cm und im Randbereich von 2 cm betragen.

Dadurch, daß die erfindungsgemäßen Stegdoppel- bzw. -mehrfachplatten aus getrennt hergestellten und anschließend zusammensetzbaren Gurtplatten bestehen, ergibt sich der prägende Vorteil, daß beide Flächen einer jeden Schicht geglättet werden können, so daß sich eine Hohlkammerplatte einer optische Güte ergibt, die der des Glases entspricht.

Das Glätten der mit den Vorsprüngen versehenen Flächen kann mittels bekannter Kalandrierwalzen (96) erfolgen, die im Bereich der Vorsprünge Aussparungen wie umlaufende Nuten (98) aufweisen, um so beim Glätten der entsprechenden Fläche von den Vorsprüngen nicht behindert zu werden. Dies wird rein schematisch durch die Fig. 4 verdeutlicht.

## Ansprüche

1. Mehrschichtige Hohlkammerplatte (10) aus thermoplastischem Kunststoff bestehend aus parallel zueinander verlaufenden, über Stege (16, 18, 20, 22) gegebenenfalls zusammensetzbar verbundenen Schichten (12, 24),

**dadurch gekennzeichnet,**

daß jede Schicht (12, 24) beidseitig geglättet ist, wobei von zumindest einer Fläche einer jeden Schicht Elemente ausgehen, über die die Schichten zur Bildung der Hohlkammerplatte mittelbar oder unmittelbar verbunden sind.

2. Hohlkammerplatte nach Anspruch 1,

**dadurch gekennzeichnet,**

daß die Schichten lösbar über die die Stege bildenden Elemente oder nach ihrem Zusammensetzen unlösbar verbunden sind.

3. Hohlkammerplatte nach Anspruch 1,

**dadurch gekennzeichnet,**

daß die Elemente vorzugsweise linienförmig verlaufende Vorsprünge (26, 30, 34, 36, 38) sind, die über stegförmige Verbindungselemente (60) verbindbar sind.

4. Hohlkammerplatte nach Anspruch 3,

**dadurch gekennzeichnet,**

daß die stegförmigen Verbindungselemente (60) im Schnitt eine H-Form aufweisen.

5. Hohlkammerplatte nach Anspruch 1,

**dadurch gekennzeichnet,**

daß die Stege zumindest abschnittsweise aus einem anderen Material als dem der Schichten bestehen.

6. Hohlkammerplatte nach Anspruch 1,

**dadurch gekennzeichnet,**

daß nach Verbinden der Schichten die von diesen ausgehenden Elemente untereinander oder die Elemente mit den diese verbindenden stegförmigen Verbindungselementen zumindest punktuell durch z.B. Ultraschall oder Hochfrequenz innig verbunden sind.

7. Hohlkammerplatte nach Anspruch 3,

**dadurch gekennzeichnet,**

daß das freie Ende (56) des Vorsprungs (26) wulstartig ausgebildet ist, wobei dem wulstartigen Ende eine entsprechend ausgebildete Aufnahme in dem H-förmig ausgebildeten stegförmigen Verbindungselement zugeordnet ist.

8. Hohlkammerplatte nach Anspruch 1,

**dadurch gekennzeichnet,**

daß die Schichten der Hohlkammerplatte in dessen Mittenbereich einen größeren Abstand als in deren Randbereichen aufweisen.

9. Verfahren zur Herstellung einer mehrschichtigen Hohlkammerplatte, wobei die Schichten über Stege gegebenenfalls lösbar zusammengesetzt werden,

**dadurch gekennzeichnet,**

daß jede Fläche einer Schicht vor dem Zusammensetzen mit einer anderen Schicht geglättet wird.

10. Hohkammerplatte nach Anspruch 9,

**dadurch gekennzeichnet,**

daß die Schichten verbindenden Elemente nach Zusammensetzen der Schichten zumindest punktuell innig verbunden wie verschweißt oder verklebt werden.

FIG.1

FIG.2

FIG.3

FIG.4

12,14,70,72

26,76,78

98

96

98

EP 0 382 084 A2